# EUROPEAN PATENT APPLICATION

(11) **EP 4 173 802 A1**
(43) Date of publication of application: **03.05.2023**
(21) Application number: 21461614.6
(22) Date of filing: 30.10.2021
(51) Int. Cl.: B29C 64/124, B29C 64/245, B29C 64/259, B33Y 10/00, B33Y 30/00

(54) **A MOUNTING SYSTEM OF A PLATFORM AND A RESIN VAT FOR A UV LCD 3D PRINTER**

(71) Applicant: ZORTRAX S.A., 10-409 Olsztyn (PL)
(72) Inventor: Chendoszko, Artur, Olsztyn (PL); Urban, Krzysztof, Olsztyn (PL)
(74) Representative: Kancelaria Eupatent.pl Sp. z.o.o

(57) **Abstract**

A recurrent mounting system of a platform (4) and a resin vat (2) for a UV LCD 3D printer, the recurrent mounting system comprising a body (1), the resin vat (2), a vertical movement axis (3) and the platform (4), first mounting means (10) for mounting the platform (4) to the vertical movement axis (3), and second mounting means (30) for mounting the resin vat (2) to the body (1). The first mounting means (10) comprise a hook (11) attached to the platform (4) and a clamp (20) with a lock (21) attached to the vertical movement axis (3), for receiving the hook (11), wherein the hook (11) is pivotable with respect to the clamp (20) when the lock (21) is unlocked and wherein the position of the hook (11) relative to the platform (4) is adjustable by means of adjusting screws (12). The second mounting means (30) comprise a first fixed rail (31) and a second retractable rail (32) attached to the body (1) and guides (33) attached to the resin vat (2) corresponding to the rails (31, 32), wherein the movement of the second rail (32) is blocked by means of a lock screw (34).

## Description

### TECHNICAL FIELD

The disclosed invention relates to a recurrent mounting system of a platform and a resin vat for a UV LCD 3D printer.

### BACKGROUND

There are different known techniques for printing 3D objects, by an additive manufacturing process, for which different types of 3D printers are used.

One of common techniques is stereolithography (SLA). It uses a laser, preferably a UV laser, directed by galvanometers, to cure the resin. Galvanometers can be thought of as mirrors used to guide the laser beam through the transparent tank bottom to a particular point on the build platform.

Another known technique is a digital light processing (DLP) in which the resin is cured with a digital projector instead of a laser. The projector projects images of whole layers onto the bottom of a vat. Light is selectively directed using a digital micromirror device (DMD), which is a component consisting of hundreds of thousands of tiny mirrors. Layers generated using DLP printers consist of so-called voxels, which are a 3D equivalent of pixels.

There is also known an LCD 3D printing technique which is similar to the DLP in that it also displays an entire layer of the printed object on the vat photopolymer. The key difference is that the UV light is emitted by an array of LEDs shining through a liquid crystal display (LCD), as opposed to the projector in the DLP. The LCD acts as a mask, revealing only the pixels necessary for the current layer. Therefore, no special device is required to direct the light, as is the case of both SLA and DLP techniques.

In each type of the above printing techniques the object being printed is attached to a platform which is movable in a vertical direction and cyclically lifts the object above the resin level (after curing the single layer/section of the object) and subsequently submerges the object into the resin (to cure another layer).

A US patent application US20070074659A1 discloses a stereolithography apparatus having a resin vat with resupply containers in one-way flow communication and a levelling container in two-way flow communication, an automatic offload cart to remove and replace build support platforms, an elevator assembly for supporting and releasably retaining a build platform removably attached to the stereolithography apparatus frame such that elevator forks supporting the build platform can be released into the vat and removed from the stereolithography apparatus with the vat, and a recoater assembly and recoater blade for mapping the resin surface in the vat and applying a fresh coating of resin to a cross-section being built in the vat.

### SUMMARY OF THE INVENTION

There is a need to provide a recurrent mounting system of a platform and a resin vat for a UV LCD 3D printer, which allows for easy and fast exchange of the platform and the resin vat.

The invention relates to a recurrent mounting system of a platform and a resin vat for a UV LCD 3D printer. The recurrent mounting system comprises a body, the resin vat, a vertical movement axis and the platform, first mounting means for mounting the platform to the vertical movement axis, and second mounting means for mounting the resin vat to the body. The first mounting means comprise a hook attached to the platform and a clamp with a lock attached to the vertical movement axis, for receiving the hook. The hook is pivotable with respect to the clamp when the lock is unlocked. The position of the hook relative to the platform is adjustable by means of adjusting screws. The second mounting means comprise a first fixed rail and a second retractable rail attached to the body and guides attached to the resin vat corresponding to the rails. The movement of the second rail is blocked by means of a lock screw.

Such recurrent mounting system of a platform and a resin vat for a UV LCD 3D printer provides repeatable positioning of the platform and the resin vat with respect to each other and with respect to the vertical movement axis. It enables fast and convenient disassembly and reattachment of the platform and the resin vat from the 3D printer. For example, it allows easy and fast switching between different platforms and between different resin vats when needed.

The advantage of the presented solution is that it is only necessary to unlock a single screw to remove or attach the resin vat. When switching between different resin vats their positioning with respect to the printer is always the same.

The first mounting means may further comprise a positioning bolt for positioning the platform parallel to the resin vat and a blocking bolt for blocking the movement of the platform when the lock is locked.

The invention also relates to a UV LCD 3D printer comprising the recurrent mounting system of the platform and the resin vat as described herein.

These and other features, aspects and advantages of the invention will become better understood with reference to the following drawings, descriptions and claims.

### BRIEF DESCRIPTION OF DRAWINGS

The disclosed invention is shown by means of preferred embodiments in a drawing, wherein:
Fig. 1 presents a recurrent mounting system for a UV LCD 3D printer according to the invention;
Fig. 2 presents the recurrent mounting system in an exploded (disassembled) view;
Fig. 3 presents the recurrent mounting system during assembly (mounting) of the platform and the resin vat;
Fig. 4A presents the system with a platform arranged horizontally;
Fig. 4B presents the system with the platform in an inclined position;
Fig. 5 presents the platform with a hook;
Fig. 6 presents a clamp to which the platform is mounted;
Fig. 7 presents a lock screw for the resin vat.

### DETAILED DESCRIPTION OF EMBODIMENTS

The following detailed description is of the best currently contemplated modes of carrying out the invention. The description is not to be taken in a limiting sense, but is made merely for the purpose of illustrating the general principles of the invention.

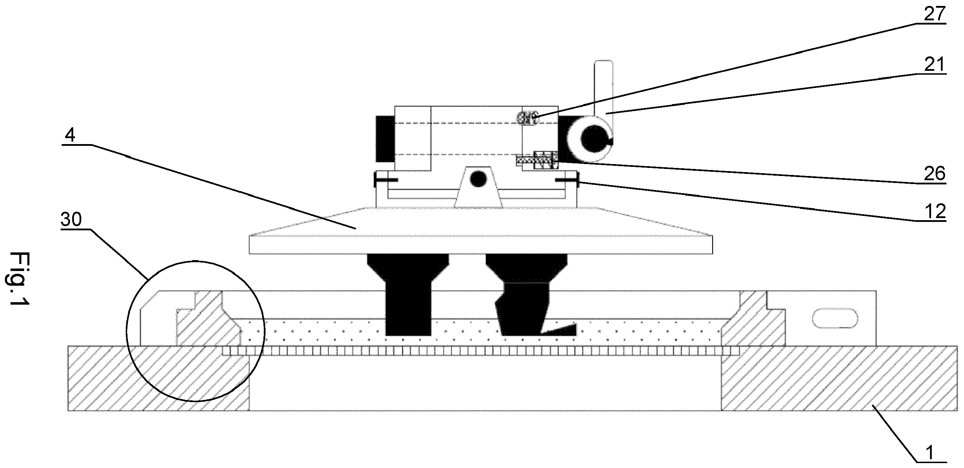

The recurrent mounting system of a platform 4 and a resin vat 2 is shown in Figs. 1-3. It is intended for a use with a UV LCD 3D printer. The system comprises first mounting means 10 for mounting the platform 4 to a vertical movement axis 3, and second mounting means 30 for mounting the resin vat 2 to a body 1.

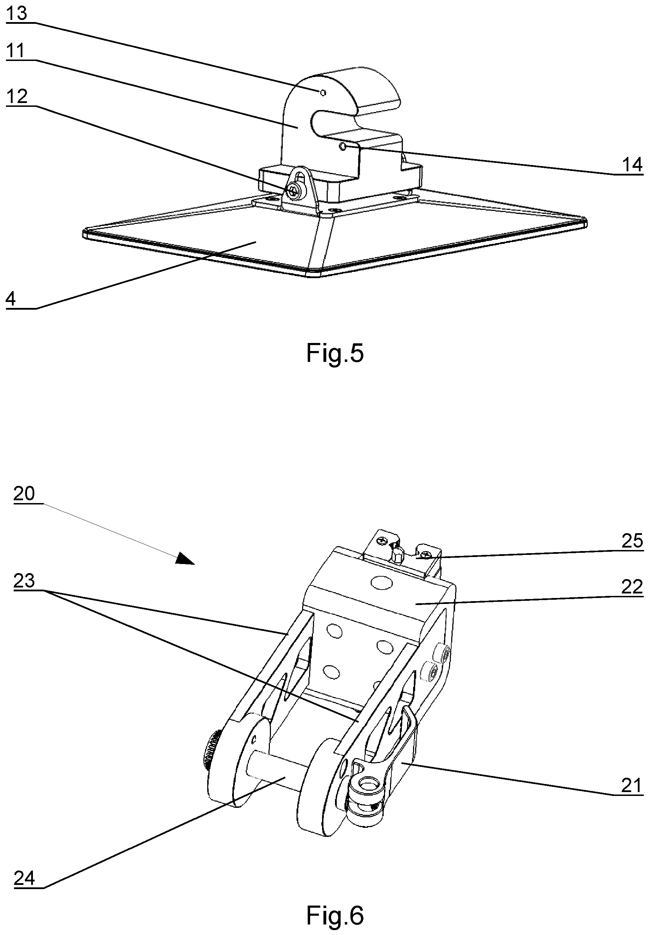

The first mounting means 10 comprise a hook 11 (as shown in details in Fig. 5 attached to the platform 4 and a clamp 20 (as shown in details in Fig. 6) with a lock 21 attached to the vertical movement axis 3, for receiving the hook 11. The hook 11 is pivotable with respect to the clamp 20 when the lock 21 is unlocked. The position of the hook 11 relative to the platform 4 is adjustable by means of adjusting screws 12.

The clamp 20 comprises a support 22, two arms 23 which are at the first ends connected to the support 22 and a main bolt 24 located between the second ends of the arms 23. The hook 11 is configured to be inserted on the main bolt 24 between the arms 23. The pivotal movement of the hook 11 on the main bolt 24 is blocked by locking the lock 21. When the lock 21 is locked, it forces two arms 23 to slightly close in on each other thereby clamping the hook 11. The clamp 20 is attached to the vertical movement axis 3 by means of a mounting 25 fixed to the support 22.

The platform 4 is attached to the hook 11 by means of adjusting screws 12 in such a manner that when the adjusting screws 12 are loosened the position of the platform 4 may be adjusted with respect to the hook 11. For example, when having several different platforms 4 with hooks 11, each of the platform 4 may be referenced/positioned with respect to its hook 11. Therefore, when switching between different platforms 4 their positioning with respect to the printer is the same.

The first mounting means 10 preferably further comprises a positioning bolt 27 for positioning the platform 4 parallel to the resin vat 2 and a blocking bolt 26 for blocking the movement of the platform 4 when the lock 21 is locked.

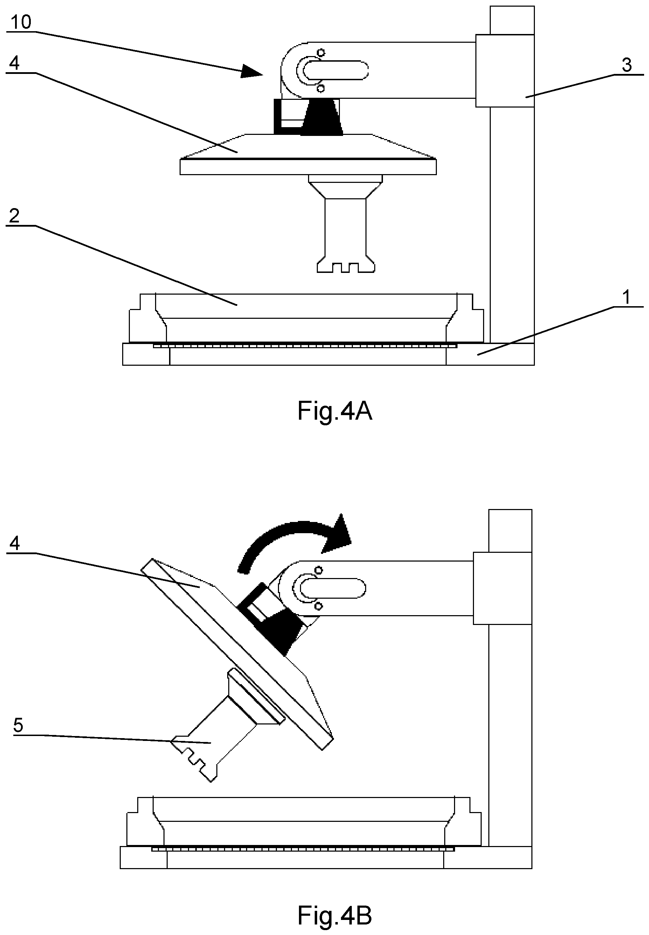

After inserting the hook 11 with the platform 4 onto the main bolt 24, the platform 4 is rotated by the user towards the horizontal position. The user is notified that the final horizontal position of the platform 4 is reached (as shown in Fig. 4A) by a characteristic "click" of the positioning bolt 27 which enters a first opening 13 present at the side of the hook 11 (Fig. 5). Subsequently, after the lock 21 is locked, the lock 11 pushes the blocking bolt 26 so that it protrudes into a second opening 14 present at the side of the hook 11, thereby blocking the movement of the platform 4. The blocking bolt 26 is equipped with a spring which, after unlocking the lock 21, forces the blocking bolt 26 to move out of the second opening 14, allowing the platform 4 to be rotated (as shown in Fig. 4B) or taken away from the clamp 20.

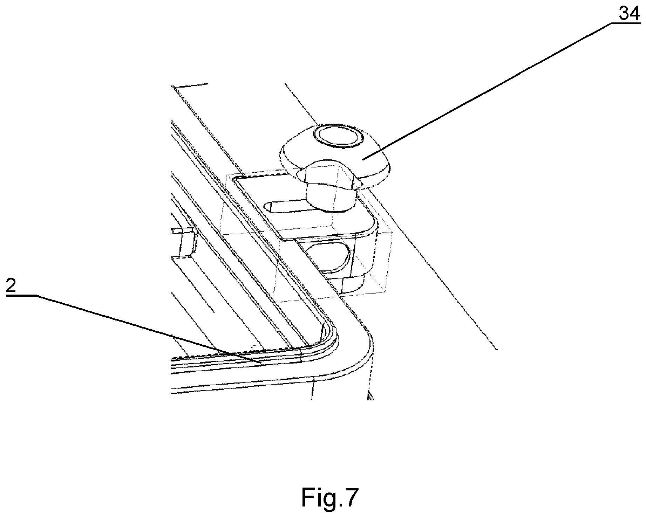

The second mounting means 30 comprise a first fixed rail 31 and a second retractable rail 32 attached to the body 1 and guides 33 attached to the resin vat 2 corresponding to the rails 31, 32. The movement of the second rail 32 is blocked by means of a lock screw 34 (as shown in details in Fig. 7).

The resin vat 2 is attachable to the base of the printer by means of two guides 33, located at the opposite sides of the resin vat 2, which are clamped by the first fixed rail 31 and the second retractable rail 32 located at the base of the printer. In the first position, the retractable rail 32 allows the resin vat 2 to be placed on a surface of a LCD screen of the printer (the vat 2 has a transparent bottom, through which light rays emitted by a UV light source can pass), wherein in the second position the retractable rail 32 together with the fixed rail 31 clamp the guides of the resin vat 2 so that the resin vat is fixed immovably to the base of the printer. The movement of the retractable rail 32 is blocked by means of a lock screw 34 which is screwed to the base through an opening present in the retractable rail 32.

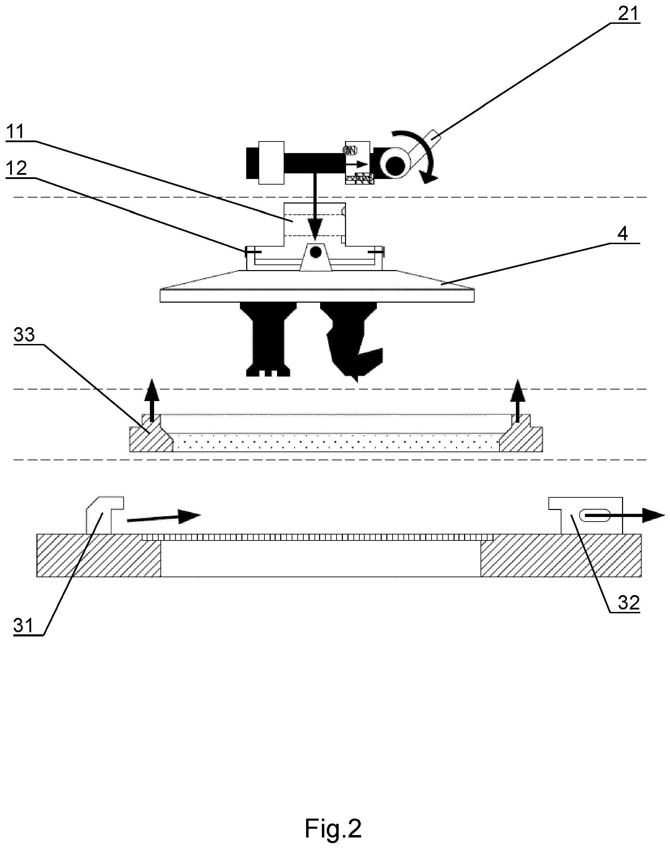

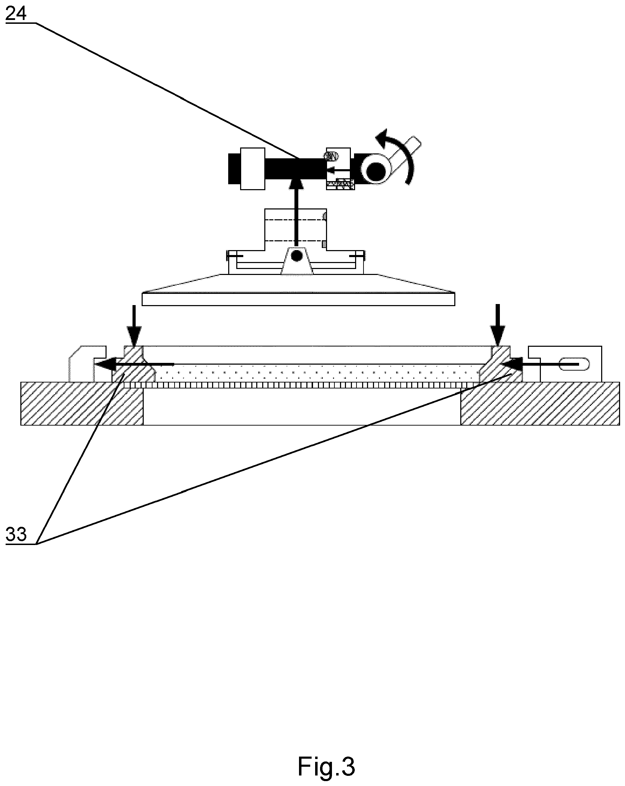

As presented in Figs. 2 and 3, first the lock screw 34 is unlocked and the retractable rail 32 is moved to the first position to remove the resin vat 2. Next the resin vat 2 is displaced to the side so that the guide 33 slides out from the fixed rail 31. Next the resin vat 2 can be freely lifted to take it away from the printer.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A recurrent mounting system of a platform (4) and a resin vat (2) for a UV LCD 3D printer, the recurrent mounting system comprising a body (1), the resin vat (2), a vertical movement axis (3) and the platform (4), first mounting means (10) for mounting the platform (4) to the vertical movement axis (3), and second mounting means (30) for mounting the resin vat (2) to the body (1);
**characterized in that**:
- the first mounting means (10) comprise a hook (11) attached to the platform (4) and a clamp (20) with a lock (21) attached to the vertical movement axis (3), for receiving the hook (11), wherein the hook (11) is pivotable with respect to the clamp (20) when the lock (21) is unlocked and wherein the position of the hook (11) relative to the platform (4) is adjustable by means of adjusting screws (12);
- the second mounting means (30) comprise a first fixed rail (31) and a second retractable rail (32) attached to the body (1) and guides (33) attached to the resin vat (2) corresponding to the rails (31, 32), wherein the movement of the second rail (32) is blocked by means of a lock screw (34).

2. The system according to claim 1, wherein the first mounting means (10) further comprise a positioning bolt (27) for positioning the platform (4) parallel to the resin vat (2) and a blocking bolt (26) for blocking the movement of the platform (4) when the lock (21) is locked.

3. A UV LCD 3D printer comprising the recurrent mounting system according to any of previous claims.
